# EUROPEAN PATENT SPECIFICATION

(11) **EP 0 404 837 B1**
(45) Date of publication and mention of the grant of the patent: **28.12.1994**
(21) Application number: 89904629.6
(22) Date of filing: 06.04.1989
(51) Int. Cl.: B29C 45/16, B65D 1/46, B29K 23/00

(54) **INJECTION MOULDING OF A PREFORM AND/OR A CONTAINER AND A CONTAINER OF THERMOPLASTIC MATERIAL**
EINSPRITZGIESSFORMUNG EINER VORGIESSFORM UND/ODER EIN BEHÄLTER AUS THERMOPLASTISCHEM MATERIAL
MOULAGE PAR INJECTION D'UNE PREFORME ET/OU D'UN RECIPIENT ET RECIPIENT EN MATIERE THERMOPLASTIQUE

(30) Priority: 08.04.1988 SE 8801284
(43) Date of publication of application: 02.01.1991
(73) Proprietor: PLM AB, 201 80 Malmö (SE)
(72) Inventor: PEDERSEN, Jan, Rune, DK-5260 Odense S (DK)
(74) Representative: Wiklund, Erik
(86) International application number: SE8900179
(87) International publication number: WO8909688

(56) References cited:
- EP-A- 0 153 120
- EP-A- 0 161 625
- EP-A- 0 170 594
- DE-A- 2 308 571
- DE-A- 2 510 457
- GB-A- 2 163 089

## Description

The present invention in general relates to the provision of a bottom reinforcement of plastics material in a container of thermoplastic material and in particular relates to a method of producing a preform and/or a container according to the preamble of claim 1 and to a container of thermoplastic material according to the preamble of claim 6. Relevant background art is disclosed in the document DE-A-2 308 571.

Containers of thermoplastic material have bean employed to a steadily increasing degree for the storage of goods in which the containers have, either in conjunction with supply of the goods, or once the goods have been placed in the container, been exposed to temperatures exceeding the glass transition temperature of the thermoplastic material. One example hereof is containers of polyethyleneterephthalate (PET).

It is previously known, for example from US-A-4 264 558, to impart to the container, by so-called temperature stabilization of the thermoplastic material, properties which entail that the container will retain its shape even when heated to relatively high temperatures. Such temperature stabilization is effected in that, on their production, the containers are formed by blowing a blank against hot mould walls (blow moulding), and that the excess pressure created for the blowing is maintained within the moulded container for a predetermined period of time. On abutment of the material against the hot mould walls, the material in the container is heated to a relatively high temperature, at the same time as the container is forced to retain its form in that the excess pressure is maintained in the interior of the container. Hereby, those stresses which have been embodied in the material on its orientation are released, at the same time as its thermally-conditioned crystallization increases. In addition, amorphous material included in the container, in the bottom portion and/or in the mouth portion undergoes thermocrystallization. In order to attain fully satisfactory form stability, it is required that, in case of for example PET, the thermally-conditioned crystallization is allowed to continue until such time as the material becomes opaque, which requires considerably longer heating times, as a rule at least of the order of magnitude of 60 s.

Lengthy dwell times in the tools entail high production costs, which is of considerable economic disadvantage in the production of containers of the type under consideration here, since such containers are produced in very large numbers.

The present invention obviates the above-outlined drawbacks. Its effects will be attained by a method according to the characterizing clause of claim 1, and by a container having the features disclosed in the characterizing clause of claim 6.

According to the present invention, the bottom portion is formed of a plastics material which remains mechanically stable, i.e. retains its rigidity, at a temperature which is higher than the temperature at which the surrounding material begins to soften. Otherwise expressed, there exists a rigidity gradient between the materials. In one preferred embodiment, the relatively more rigid material is given a plate-like shape and is often designed as a substantially circular disc in the region of the axis of the hollow body.

Examples of plastics materials which may be used according to the present invention in order to increase the capability of the bottom portion to retain mechanical stability and rigidity at elevated temperatures are polyamide, polyester, in particular polyethyleneterephthalate, polycarbonate and polyacrylonitrile.

It should be observed that, having once gained an insight into the present invention and its aspects, the skilled reader of this specification will be in a position to select, without difficulty, those materials and combinations thereof which are suitable in each physical application. Materials described herein are to be taken solely as examples and the present invention is by no means restricted thereto.

Further appropriate embodiments of the present invention are set forth in the dependent claims.

The nature of the present invention and its aspects will be more readily understood from the following brief description of the accompanying drawings, and discussion relating thereto.

In the accompanying drawings:
- Fig. 1: is a section through an injection nozzle and a mould connected to the injection nozzle during commenced injection moulding of a body from which the container according to the present invention is thereafter formed;
- Fig 2: is a section corresponding to that of Fig. 1 once the injection moulding of the body has been completed;
- Figs. 3a,3b,3c: are sections through embodiments of bodies formed by means of an apparatus according to Figs. 1 and 2; and
- Figs. 4a,4b,4c: show containers formed from the bodies according to Figs.3a-3c.

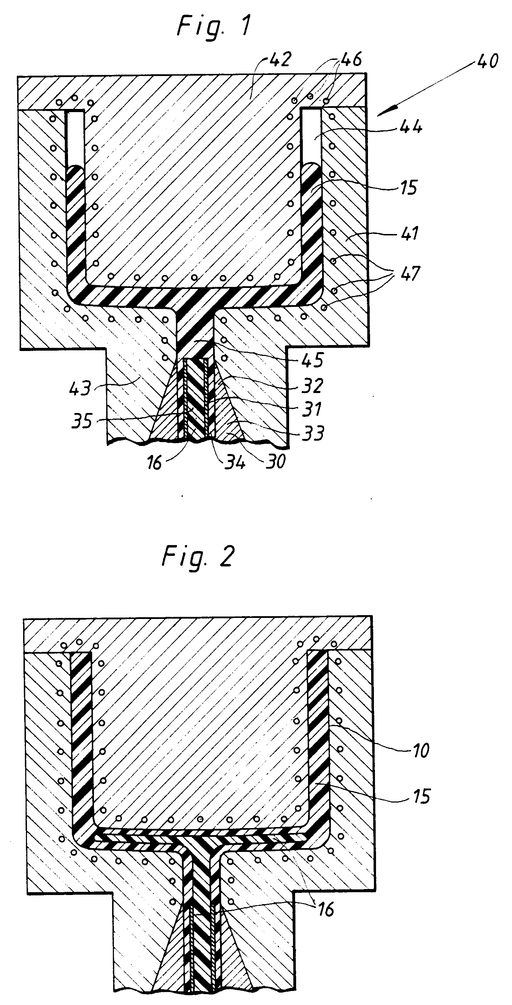

Referring to the drawings, Figs. 1 and 2 show an injection moulding machine 30 provided with an inner nozzle 31 and an outer nozzle 32.

The injection moulding machine is connected to an injection mould 40 composed of an outer mould portion 41 and an inner mould portion 42. The injection mould 40 is provided with a receptacle portion 43 to which a connecting portion 33 of the injection moulding machine 30 is connected. In the connecting portion 33, there are disposed a first supply channel 34 and a second supply channel 35 which, once the connecting portion 33 and the receptacle portion 43 have been interconnected, merge in a communication channel 45 which is located in the injection mould 40. The communication channel connects to a mould cavity 44 in the injection mould.

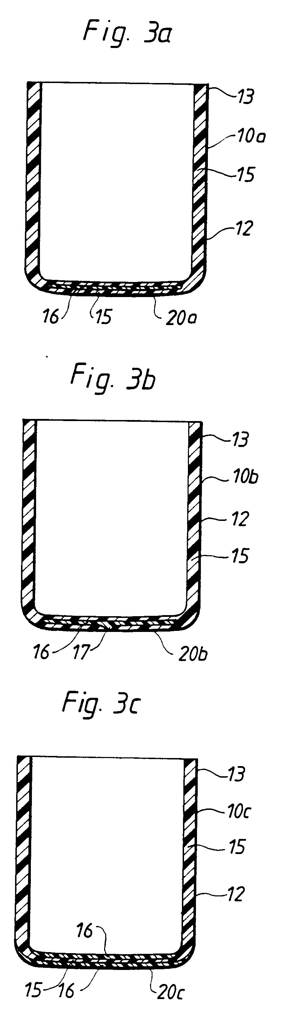

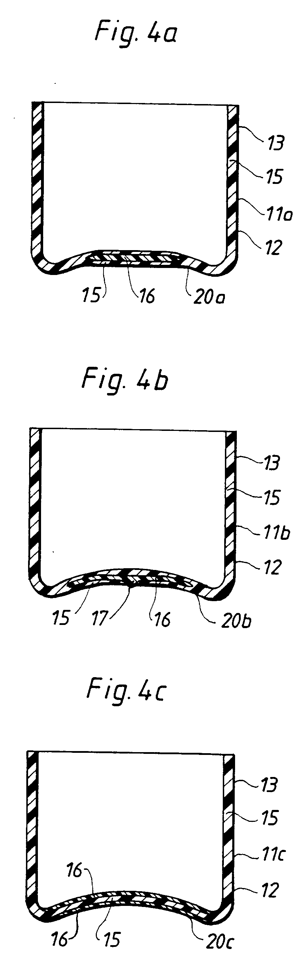

Figs. 3a, 3b and 3c illustrate a body 10a, 10b, 10c which, in certain embodiments, constitutes a preform from which a container 11a, 11b, 11c is formed (Figs. 4a,4b). In certain embodiments, the body constitutes the finished container.

The container comprises a container body 12, a mouth portion 13 and a bottom portion 20a, 20b, 20c. In the figures, the container is shown in embodiments in which the container is composed of a first plastics material 15 and a second plastics material 16. In the embodiments in Figs. 3b and 4b, respectively, the second plastics material is in direct contact with the surroundings in a central region 17 of the outer surface of the bottom portion. In the embodiment illustrated in Figs. 3a and 4a, respectively, the second plastics material 16 is whollys enclosed by the first plastics material 15 of the container and the preform, respectively. In the embodiment illustrated in Figs. 3c and 4c, respectively, the first plastics material 15 is wholly enclosed by the seconds plastic material 16 of the container and the preform, respectively. The second plastics material consists of a plastics material which is of a higher rigidity than the first material at a temperature which is higher than the softening point of the first material. The term softening point is here taken to mean primarily the glass transition temperature of the material. Rapidly crystallizing material is particularly well suited for use in the embodiments according to Figs. 3c and 4c, in which the reinforcement plates form a bounding definition of the bottom portion facing towards the "interior" of the container and/or towards the "exterior" of the container. As a result of the arrangement illustrated in the figure, material is directly accessible for abutment against hot forming devices for transferring thermo energy to the material and thermo-crystallization thereof occasioned thereby. In the illustrated embodiments, the second plastics material forms, in a region which is as a rule enclosed or surrounded by the standing surface of the container, a plate-like reinforcement layer. Generally, this reinforcement layer is centered about the axis of the container and, as a rule, forms a substantially circular plate or disc.

As was mentioned above, the second plastics material consists of a thermoplastic material, preferably of polyamide, polycarbonate, polyester, in particular polyethylene terephthalate, and polyacrylonitrile or mixtures thereof. In those embodiments wherein the second plastics material consists of polyethylene terephthalate, a rapidly crystallizing quality of such material is selected.

The first plastics material consists of a thermoplastic material, preferably of a polyester, such as PET, or a polyamide.

The plate shown in the figures is determinative of the capability of the container to withstand elevated temperatures in its bottom portion. As a rule, requisite temperature stability in the container body of the container is attained in that the material therein undergoes orientation and, as a rule, biaxial orientation. As a result of subsequent temperature stabilization, which is effected by heating the material to a temperature adapted to the highest temperature at which the material is intended to be used, there will be attained the contemplated stability in the container body. Since the material in the container body is relatively thin, said temperature stabilization of the material is relatively simple to achieve. On the other hand, for the bottom of the container, the material is oriented to but a slight extent, and moreover the material is often relatively thick. Since plastics material suffers from poor thermal conductivity, a thermo-crystallization of the material takes a relatively lengthy time, which in the mass production of articles, for example the production of containers, entails unacceptably high costs. By the insertion of the plate of the second plastics material in the bottom portion, the mechanical stability and rigidity of the bottom portion will also be obtained at elevated temperatures. Since the plate of the second plastics material will only consist of a relatively slight amount of material, employment of the above plate will not entail any unacceptable increase in the cost of the finished product. Selection of material for the plate will also determine the maximum temperature at which the bottom portion remains mechanically stable. As a rule, no after-treatment in the form of thermo-crystallization is, therefore, required.

In the production of a container according to the present invention, the shaping of a preform or the forming of a container commences in that the first material 15 is fed via the outer nozzle 32 of the injection moulding machine, into the mould cavity 44 of the injection mould 40. The material is cooled more rapidly against the walls of the injection mould than in a central layer, which implies that, when the second plastics material 16 is fed via the inner nozzle 31, into the communication channel 45 of the receptacle portion of the injection mould, the second material will displace the first material in a central layer out towards the as yet unfilled parts of the mould cavity (cf. Fig. 2). In such instance, a layer of a second material will be formed centrally in the first material.

By selection of the fill factor of the mould cavity before the introduction of material through the inner nozzle 31 is commenced, and selection of the moment herefor, the size and thickness, respectively, will be determined for that plate which the second material 16 forms, in the preform and in the finished container, respectively. By the passage of heat-controlling medium - through the channels 46-47 of the outer and inner mould portions 41 and 42, respectively the rate of stiffness of the plastics material introduced into the mould cavity is controlled to a certain extent. The rate and amount of the flow passing into the mould cavity may also be employed to control the spreading process of both of the plastics materials. Once the mould cavity has been filled and the material has, by cooling, obtained the requisite mechanical stability/rigidity, the two mould portions 41 and 42 are separated the thus formed body (the preform), or alternatively the container, being exposed and may be removed from the injection mould. Residual material in connection with the communication channel 45 is removed from the formed body.

In certain embodiments, for example a mechanical post-forming of the bottom portion may be carried out in order that this will obtain the forms illustrated in Figs. 4a and 4b, respectively. In other embodiments, the mould cavity of the injection mould is selected and dimensioned in such a manner that the bottom portion obtains, already in conjunction with the injection moulding, a final form similar to that illustrated in Figs. 4a and 4b, respectively.

It should be pointed out that the relationships illustrated in the figures between the outer dimensions of the formed bodies, for example diameter, height and material thickness of the container body and bottom portion, respectively, have been exaggerated in order more clearly to illustrate the inventive concept as herein disclosed.

The above detailed description has referred to but a limited number of embodiments of the present invention, but skilled in the art will readily perceive that the present invention encompasses a large number of embodiments without departing from the scope of the appended claims.

## Claims

1. A method of producing a container or a preform for reshaping to a container, having a closed bottom portion with increased temperature stability, said container including a multi-layer structure comprising a first plastics material and a second plastics material, in which an injection moulding machine, operative for at least double layer injection, injection moulds the container or the preform, **characterised** in that the injection moulding machine, on forming of the container or the preform, is controlled in such a way that the second plastics material is disposed only in said bottom portion, and that there is a rigidity gradient between said two materials such that the second plastics material has a higher rigidity than the first plastics material at a temperature which is higher than the softening point of the first material.

2. The method as claimed in claim 1, wherein the second plastics material is disposed in a region which, in the finished container, encompasses a region inside the standing surface of the container.

3. The method as claimed un claim 1 or 2, wherein the second plastics material layer is disposed as a substantially circular plate or disc in the region of the axis of the container.

4. The method as claimed in any one of the preceding claims, wherein the second plastics material consists of a thermoplastic material comprising polyamide, polycarbonate, polyester, polyacrylonitrile, or mixtures thereof.

5. The method as claimed in claim 4, wherein the polyester comprises polyethylene terephthalate, in particular rapidly-crystallising polyethylene terephtalate.

6. A container of substantially thermoplastic material having a closed bottom portion (20a, 20b, 20c) with elevated temperature stability, the bottom portion comprising a multi-layer material composed of at least a first plastics material (15) and a second plastics material (16), **characterised** in that in at least the central portion (21, 21a) of the bottom portion (20, 20a) there is included one or more plates (22) and/or discs (22a) of the second material (16), and that there is a rigidity gradient between said two materials (15, 16) such that the second material (16) has a higher rigidity than the first material (15) at a temperature which is higher than the softening point of the first material (15).

7. The container as claimed in claim 6, wherein said plates (22) and/or discs (22a) are rendered discrete from contact with the interior of the container by the first plastics material (15).

8. The container as claimed in claim 6, wherein said plates (22) and/or discs (22a) on both sides enclose the first plastics material (15), i.e. towards both the interior and the exterior of the container (11a, 11b, 11c).

9. The container as claimed in claim 6, wherein the first plastics material (15), at least on one side but preferably on both sides, encloses the second plastics material (16).

10. The container as claimed in any one of claims 6-9, wherein said plates (22) and/or discs (22a) consist of polyamide, polycarbonate, polyester, in particular polyethylene terephthalate, polyacrylonitrile, or mixtures thereof.

11. The container as claimed in any one of claims 6-10, wherein the second plastics material (16) is reinforced in that mechanically reinforcing bodies of fibres, balls, particles etc of, for example glass, carbon etc, are incorporated into the material.

## Patentansprüche

1. Verfahren zum Herstellen eines Behälters oder eines Vorformlings zum Umformen zu einem Behälter, der einen geschlossenen Bodenbereich mit erhöhter Temperaturstabilität hat, wobei der Behälter eine mehrschichtige Struktur mit einem ersten Kunststoffmaterial und einem zweiten Kunststoffmaterial aufweist, bei dem mit einer Spritzgießmaschine, die wenigstens zum Spritzgießen einer Doppelschicht betriebsfähig ist, der Behälter oder der Vorformling durch Spritzgießen hergestellt wird, dadurch gekennzeichnet, daß die Spritzgießmaschine beim Formen des Behälters oder des Vorformlings in solcher Weise gesteuert wird, daß das zweite Kunststoffmaterial nur in dem Bodenbereich angeordnet wird, und daß ein Festigkeitsgradient zwischen den beiden Materialien auf solche Weise existiert, daß das zweite Kunststoffmaterial eine höhere Festigkeit als das erste Kunststoffmaterial bei einer Temperatur hat, die höher ist als der Erweichungspunkt des ersten Materials.

2. Verfahren nach Anspruch 1, bei dem das zweite Kunststoffmaterial in einem Bereich angeordnet ist, der beim fertiggestellten Behälter ein Gebiet innerhalb der Standfläche des Behälters einschließt.

3. Verfahren nach Anspruch 1 oder 2, bei dem die zweite Kunststoffmaterialschicht als eine im wesentlichen kreisförmige Platte oder Scheibe im Gebiet der Achse des Behälters angeordnet ist.

4. Verfahren nach einem der vorstehenden Ansprüche, bei dem das zweite Kunststoffmaterial aus einem thermoplastischen Material besteht, das Polyamid, Polykarbonat, Polyester, Polyacrylonitril oder Mischungen derselben aufweist.

5. Verfahren nach Anspruch 4, bei dem der Polyester Polyethylen-Terephtalat, insbesondere schnell kristallisierendes Polyethylen-Terephtalat aufweist.

6. Behälter aus im wesentlichen thermoplastischem Material mit einem geschlossenen Bodenbereich (20a, 20b, 20c) mit erhöhter Temperaturstabilität, wobei der Bodenbereich ein mehrschichtiges Material aufweist, das aus wenigstens einem ersten Kunststoffmaterial (15) und einem zweiten Kunststoffmaterial (16) besteht, dadurch gekennzeichnet, daß wenigstens im mittigen Bereich (21, 21a) des Bodenbereiches (20, 20a) eine oder mehrere Platten (22) und/oder Scheiben (22a) des zweiten Materials (16) enthalten ist bzw. sind, und daß dort ein Festigkeitsgradient zwischen den beiden Materialien (15, 16) auf solche Weise existiert, daß das zweite Material (16) eine höhere Festigkeit als das erste Material (15) bei einer Temperatur aufweist, die höher ist als der Erweichungspunkt des ersten Materials (15).

7. Behälter nach Anspruch 6, bei dem die Platten (22) und/oder Scheiben (22a) von Kontakt mit dem Inneren des Behälters durch das erste Kunststoffmaterial (15) getrennt gehalten sind.

8. Behälter nach Anspruch 6, bei dem die Platten (22) und/oder Scheiben (22a) auf beiden Seiten das erste Kunststoffmaterial (15) umschließen, d. h. sowohl zum Innern als auch zum Äußeren des Behälters (11a, 11b, 11c) hin.

9. Behälter nach Anspruch 6, bei dem das erste Kunststoffmaterial (15) wenigstens auf einer Seite, jedoch vorteilhafterweise auf beiden Seiten das zweite Kunststoffmaterial (16) umschließt.

10. Behälter nach einem der Ansprüche 6 bis 9, bei dem die Platten (22) und/oder Scheiben (22a) aus Polyamid, Polykarbonat, Polyester, insbesondere Polyethylen-Terephtalat, Polyakrylonitril oder Mischungen derselben bestehen.

11. Behälter nach einem der Ansprüche 6 bis 10, bei dem das zweite Kunststoffmaterial (16) verstärkt ist, indem mechanisch verstärkende Körper von Fasern, Kugeln, Teilchen usw. aus z. B. Glas, Kohlenstoff usw. in das Material eingegliedert sind.

## Revendications

1. Procédé de fabrication d'un récipient ou d'une ébauche destinée à être mise sous forme d'un récipient, ayant une partie fermée de fond dont la stabilité à température élevée est accrue, le récipient comprenant une structure multicouche ayant une première matière plastique et une seconde matière plastique, dans lequel une machine de moulage par injection, destinée à assurer au moins l'injection d'une double couche, assure le moulage par injection du récipient ou de l'ébauche, caractérisé en ce que la machine de moulage par injection, lors de la formation du récipient ou de l'ébauche, est commandée de manière que la seconde matière plastique ne soit placée que dans la partie de fond, et en ce qu'il existe un gradient de rigidité entre les deux matières si bien que la seconde matière plastique a une rigidité supérieure à celle de la première matière plastique à une température qui est supérieure à la température de ramolissement de la première matière.

2. Procédé selon la revendication 1, dans lequel la seconde matière plastique est placée dans une région qui, dans le récipient terminé, recouvre une région se trouvant à l'intérieur de la surface d'appui du récipient.

3. Procédé selon la revendication 1 ou 2, dans lequel la couche de la seconde matière plastique est disposée sous forme d'un disque ou d'une plaque sensiblement circulaire dans la région de l'axe du récipient.

4. Procédé selon l'une quelconque des revendications précédentes, dans lequel la seconde matière plastique est formée d'une matière thermoplastique comprenant un polyamide, un polycarbonate, un polyester, un polyacrylonitrile ou un de leurs mélanges.

5. Procédé selon la revendication 4, dans lequel le polyester est le téréphtalate de polyéthylène, notamment d'une qualité cristallisant rapidement.

6. Récipient d'une matière pratiquement thermoplastique ayant une partie fermée de fond (20a, 20b, 20c) ayant une stabilité aux températures élevées, la partie de fond comprenant une matière multicouche composée d'au moins une première matière plastique (15) et d'une seconde matière plastique (16), caractérisé en ce que, par la partie centrale au moins (21, 21a) de la partie de fond (20, 20a), une ou plusieurs plaques (22) et/ou disques (22a) de la seconde matière (16) sont incorporés, et en ce qu'il existe un gradient de rigidité entre les deux matières (15, 16), si bien que la seconde matière (16) a une rigidité supérieure à celle de la première matière (15) à une température qui est supérieure à la température de ramollissement de la première matière (15).

7. Récipient selon la revendication 6, dans lequel les plaques (22) et/ou disques (22a) sont séparés du contact avec l'intérieur des récipients par la première matière plastique (15).

8. Récipient selon la revendication 6, dans lequel les plaques (22) et/ou disques (22a) entourent des deux côtés la première matière plastique (15), c'est-à-dire à la fois vers l'intérieur et l'extérieur du récipient (11a, 11b, 11c).

9. Récipient selon la revendication 6, dans lequel la première matière plastique (15), au moins d'un côté mais de préférence des deux côtés, entoure la seconde matière plastique (16).

10. Récipient selon l'une quelconque des revendications 6 à 9, dans lequel les plaques (22) et/ou disques (22a) sont formés d'un polyamide, d'un polycarbonate, d'un polyester, en particulier de téréphtalate de polyéthylène, d'un polyacrylonitrile ou d'un de leurs mélanges.

11. Récipient selon l'une quelconque des revendications 6 à 10, dans lequel la seconde matière plastique (16) est renforcée car des corps d'armature mécanique formés de fibres, de billes, de particules, etc. par exemple de verre, de carbone, etc. sont incorporés à la matière.
